# EUROPEAN PATENT SPECIFICATION

(11) **EP 3 742 948 B1**
(45) Date of publication and mention of the grant of the patent: **04.12.2024**
(21) Application number: 19701727.0
(22) Date of filing: 18.01.2019
(51) Int. Cl.: A47K 3/40, B29C 70/60, B29C 70/68, B29L 31/00

(54) **AN ARTICLE OF SANITARY WARE COMPRISING A HOLLOW SHELL AND A FILLER MATERIAL WHICH IS DISPOSED IN THE SHELL**
SANITÄRARTIKEL MIT EINER HOHLEN SCHALE UND EINEM IN DER SCHALE ANGEORDNETEN FÜLLMATERIAL
ARTICLE D'ÉQUIPEMENT SANITAIRE COMPRENANT UNE COQUE CREUSE ET UN MATÉRIAU DE REMPLISSAGE QUI EST DISPOSÉ DANS LA COQUE

(30) Priority: 25.01.2018 GB 201801202
(43) Date of publication of application: 02.12.2020
(73) Proprietor: Kohler Mira Limited, Cheltenham, Gloucestershire GL52 5EP (GB)
(72) Inventor: SANDELL, Steven Richard, Cheltenham, Gloucestershire GL52 5EP (GB); NICHOLS, John, Cheltenham, Gloucestershire GL52 5EP (GB)
(74) Representative: Barker Brettell LLP
(86) International application number: PCT/GB2019/050150
(87) International publication number: WO 2019/145687

(56) References cited:
- WO-A1-2005/011455
- DE-A1- 2 618 070
- GB-A- 2 264 083
- US-B2- 7 752 686

## Description

The present disclosure relates to an article of sanitary ware, in particular, but not exclusively a shower tray. The disclosure also relates to methods of manufacture of an article of sanitary ware, e.g. a shower tray.

Shower trays comprising an acrylic-capped acrylonitrile butadiene styrene (ABS) upper layer adhered to and supported by a resin-stone base are known. Such trays are usually manufactured by pouring a resin-stone filler into a mould containing a shell of acrylic-capped ABS prc-formcd to the desired shape of the top and sides of the shower tray and hardening the filler to form the base. In this way, the acrylic-capped ABS upper layer forms the outer surface of the exposed parts of the tray in its installed position and the filler supports the upper layer and forms an underside of the tray that contacts the surface on which the tray is installed.

WO2005/011455 discloses shower trays and like articles, in which an outer shell of plastics material encases a core of stone-resin material. The outer shell comprises upper and lower members provided with formations that co-operate to locate and align the members, wherein overlapping regions of the formations are removed after the core is formed to provide a base for the article and a hole for wastewater.

A problem of known acrylic-capped ABS shower trays is that the weight of the trays can make lifting and carrying the trays during installation difficult. Lifting and carrying heavy trays can result in injury to the lifter and/or cause the lifter to drop the tray resulting in damage to the tray. Typically, 800 mm by 800 mm trays can weigh from around 26 kg to 33 kg.

Shower trays comprising a plastic cap or shell filled with a stone-resin material are sometimes called polymer-concrete shower trays.

Low level shower trays are known. Conveniently, low level shower trays may be configured such that they can be installed such that they are level or nearly level with a floor of a room, e.g. a shower room or wet room, in which they are installed. Accordingly, a user does not have to step up or down into the shower tray when entering or exiting a shower cubicle or shower enclosure comprising the low level shower tray. Low level shower trays may be preferred from an aesthetic perspective, in order to fit in with a modern design aesthetic. Low level shower trays may also be well suited for users with limited or impaired mobility. Further, low level shower trays may also be of reduced weight when compared to conventional shower trays, making installation easier.

For any shower tray, it is important that the shower tray can withstand impacts, mechanical stresses and strains during installation and use.

A low level shower tray typically has a relatively shallow profile; hence the structure of the shower tray may be much thinner than that of conventional trays. Therefore providing a low level shower tray with adequate or even improved impact resistance and/or mechanical stress and/or strain properties can be challenging. Ideally, such mechanical properties should be achieved whilst keeping the weight of the shower tray to an acceptable level for installation.

The invention is defined by appended claims 1-14, which comprises independent claims 1 and 13, and dependent claims 2-12 and 14.

A first aspect provides an article of sanitary ware comprising a hollow shell; wherein a filler material is disposed within the shell, the filler material forming a continuous structure within the shell, the shell comprising: a first surface adapted to provide a water collection surface; and a second surface opposed to the first surface; wherein the second surface comprises a pattern of recesses with ribs therebetween, the depth of the bases of the recesses varies with position in such a way that the minimum distance between the water collection surface and bases of the recesses is maintained substantially constant and wherein the ribs comprise the filler material.

The filler material may form a continuous web within the shell.

The article of sanitary ware may be a shower tray. The shower tray may have any shape and dimensions. The shower tray may be generally circular, ovoid, rectangular, square, pentagonal or a quadrant in shape. A floor may form at least a portion of the water collection surface of the shower tray. The floor may be the portion of the shower tray upon which a user typically stands during use. The floor may be inclined. The shower tray may be a low level shower tray.

The floor of the shower tray may be bounded by a rim. One or more side walls may extend from the edges of the floor. The term side wall may refer to any face which extends between the floor and the rim along one or more peripheral edges where the floor and the rim do not meet. In a preferred embodiment, the or each side wall may not extend above an uppermost point of the floor. In a further preferred embodiment, the shower tray may only have a sidewall along one peripheral edge of the floor. At one or more edges of the floor, the floor may gradually slope up to the rim. The floor may slope to the rim at edges of the floor with no sidewall.

The shower tray may have a height of up to 100 mm, preferably up to 60 mm, more preferably up to 50 mm, yet more preferably up to 40 mm and yet more preferably up to 30 mm. In a preferred embodiment, the shower tray may have a height of 26 mm.

The pattern of recesses may extend across at least a portion of the second surface. The pattern of recesses may extend across at least 50% of the second surface. In preferred embodiments the pattern of recesses may extend across at least 60%, preferably at least 70%, more preferably at least 80%, yet more preferably at least 90%. Most preferably the pattern of recesses may extend across substantially all of the second surface.

The pattern of recesses may comprise a repeating pattern. The repeating pattern may repeat in one or more, e.g. one or two, directions. For instance, the repeating pattern may repeat in a first direction and in a second direction The first direction and the second direction may be perpendicular to one another.

The pattern of recesses may be symmetrical about at least one line of symmetry. For instance, the pattern of recesses may be symmetrical about a first line of symmetry and a second line of symmetry. The first line of symmetry may be perpendicular to the second line of symmetry.

Each recess may be of any shape and dimensions. Each recess may have a longest lateral dimension of up to 150 mm, preferably up to 120 mm, more preferably up to 100 mm, yet more preferably up to 80 mm or most preferably up to 50 mm.

Each recess may be curved, e.g. round or ovoid, curvilinear or polygonal in cross-section. At least some of the recesses in the repeating pattern may tessellate with one another. At least some of the recesses in the repeating pattern may be polygonal in cross-section, e.g. triangular, quadrilateral, pentagonal, hexagonal, heptagonal, octagonal, nonagonal or decagonal. At least some of the recesses in the repeating pattern may have the form of a regular polygon in cross-section, e.g. an equilateral triangle, a square or a regular hexagon.

The shell may be configured such that a distance between any given point on the first surface and a corresponding point on the second surface may be at least 2 mm, preferably at least 5 mm.

The filler material may occupy a major portion of an internal volume of the shell. The filler material may occupy more than 60%, preferably more than 70%, more preferably more than 80% or yet more preferably more than 90% of the internal volume of the shell. In preferred embodiments the filler material may occupy substantially all of the internal volume of the shell.

The filler material may act to add mechanical strength and/or rigidity to the sanitary article. The filler material may bond or be bonded to the shell or a portion thereof.

The filler material may comprise a stone-resin material, e.g. a concrete. The filler material may comprise a polymeric material. The filler material may comprise a composite material. The filler material may comprise a cellular material such as a foam or a honeycomb material. The filler material may comprise a honeycomb material, in which at least some of the cells are filled at least partially with another material such as a foam.

The filler material may have been cured within the shell.

The filler material may comprise a composite filler. The composite filler may be formed from curing a resin-stone mix, e.g. of limestone, calcium carbonate, dicyclopentadiene (DCPD) resin and a catalyst.

The continuous structure may be of varying thickness throughout its extent. For instance, the continuous structure may have one or more regions of a minimum thickness, for instance of 2 mm or preferably 5 mm, and regions of greater thickness than the minimum thickness. Thus, the filler material may provide adequate strength and rigidity to the article of sanitary ware, e.g. shower tray, whilst minimising the weight of the article of sanitary ware.

The shell may comprise, or consist essentially of, a plastics material.

The or a floor may be made of materials that provide a hardwearing, scratch-resistant outer surface with softer material underneath for absorbing impacts during use. For instance, the or a floor may be made of an acrylic-capped ABS material. The acrylic material forms the hardwearing, scratch-resistant outer surface and the softer underlying ABS material absorbs impacts. The or a floor may be provided with one or more anti-slip features (not shown) such as protrusions, ridges or roughened regions.

The or a floor may be of uniform thickness. The or a floor may have a thickness of at least 1 mm and/or up to 5 mm. The ratio of the thickness of the ABS to acrylic may be at least 5:1 and/or up to 15: 1. For instance, the ratio of the thickness of the ABS to acrylic may be 9:1. In an embodiment, the or floor may be 2 mm thick with a skin of acrylic 0.2 mm thick and a sub-layer of ABS 1.8 mm thick.

At least a portion of the first surface may be coated with, or have impregnated therein, an antimicrobial agent.

The second surface may comprise one or more through holes that are large enough to permit air or other gases to pass through them without being large enough for any filler material, if present, to pass through.

The article of sanitary ware, e.g. the shower tray, may comprise a waste adapted to be connected to a waste pipe. The waste may comprise an elongate aperture.

The second surface may be provided with one or more attachment features for receiving legs or feet. Each attachment feature may comprise a socket. The attachment features may be configured to engage with the legs or feet in any suitable manner, e.g. by a push interference fit or by screwing.

The shell may comprise two or more shell members. The shell or shell members may be made by any suitable process. The shell or shell members may comprise plastics materials. The shell or shell members may be made for example by vacuum moulding.

For instance, the shell may be formed of a first shell member and a second shell member. The first shell member may include the first surface. The second shell member may include the second surface.

The first shell member may be made of materials that provide a hardwearing, scratch-resistant outer surface with softer material underneath for absorbing impacts during use. For instance, the first shell member may be made of an acrylic-capped ABS material. The acrylic material forms the hardwearing, scratch-resistant outer surface and the softer underlying ABS material absorbs impacts.

The first shell member may be of uniform thickness. The first shell member may have a thickness of at least 1 mm and/or up to 5 mm. The ratio of the thickness of the ABS to acrylic may be at least 5:1 and/or up to 15:1. For instance, the ratio of the thickness of the ABS to acrylic may be 9:1. In an embodiment, the first shell member may be 2 mm thick with a skin of acrylic 0.2 mm thick and a sub-layer of ABS 1.8 mm thick.

The second shell member may be made from a plastics material. The second shell member may be made from ABS. The second shell member may be of uniform thickness. The second shell member may have a thickness of at least 1 mm and/or up to 5 mm.

The shell members may be provided with formations that co-operate to locate and align the members. In embodiments, overlapping regions of the formations may be removed during manufacture of the article of sanitary ware.

The article of sanitary ware may be installed at a location to provide or as part of an ablutionary installation. For instance, the shower tray may be installed within a shower cubicle or shower enclosure. The ablutionary installation may be in a room within a residential, commercial or industrial building. The ablutionary installation may be within a cabin of a vehicle such as a boat.

When installed as part of a shower enclosure or shower cubicle, the second surface of the shower tray may be in direct contact with an installation surface. The installation surface may comprise a sand bed. The recesses and ribs therebetween may facilitate settling of the shower tray on the sand bed during installation. Alternatively, the shower tray may be raised from the installation surface by one or more feet or legs.

The or a waste of the shower tray may be connected to a wastepipe for conveying waste water towards a drain.

A shower comprising one or more sprayers for dispensing water may be located within the shower cubicle or shower enclosure. The shower may be arranged or may be arrangeable such that water dispensed therefrom is directed towards the water collection surface.

A second aspect provides a method of manufacture of an article of sanitary ware comprising:
forming a shell, disposing a filler material within the shell, the filler material forming a continuous structure within the shell, the shell comprising: a first surface adapted to provide a water collection surface; and a second surface opposed to the first surface; wherein the second surface comprises a pattern of recesses with ribs therebetween, the depth of the bases of the recesses varies with position in such a way that the minimum distance between the water collection surface and bases of the recesses is maintained substantially constant and wherein the ribs comprise the filler material.

The method may comprise the steps of: providing a first shell member; placing a filler material within the first shell member; and encasing the filler material by completing the shell with one or more further shell members.

The method may further comprise applying pressure to the shell with the or a filler material encased therein.

Additionally or alternatively, the shell with the filler material encased therein may be held at a predetermined, e.g. elevated temperature, for a predetermined period of time.

The method of manufacture may be used to make an article of sanitary ware according to the first aspect.

Except where mutually exclusive, any of the features of the first aspect may be employed *mutatis mutandis* in the second and other aspects.

Example embodiments will now be described with reference to the accompanying drawings, in which:
**Figure 1** is a perspective view of an example embodiment of a low level shower tray;
**Figure 2** is a top view of the low level shower tray shown in Figure 1;
**Figure 3** is a side view of the low level shower tray shown in Figure 1;
**Figure 4** is a bottom view of the low level shower tray shown in Figure 1;
**Figure 5** is a cross-section through the low level shower tray shown in Figure 1; and
**Figure 6** is a flow chart of an example embodiment of a method of manufacture.

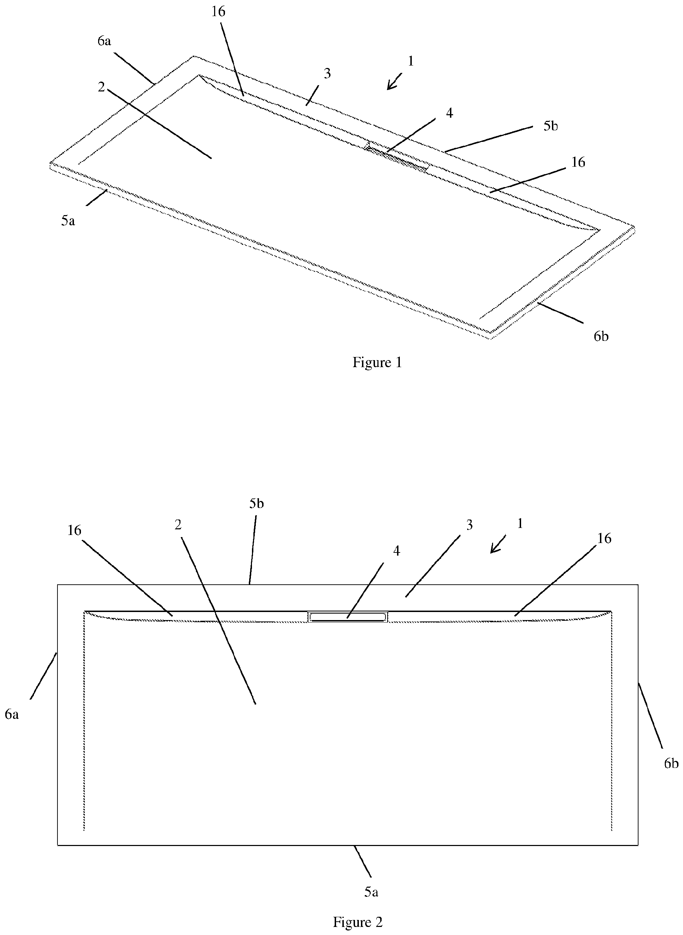

Referring to Figures 1 to 5, an example embodiment of a low level shower tray 1 is shown.

The low level shower tray 1 is rectangular in form. The low level shower tray 1 comprises a pair of opposing longer edges 5a, 5b and a pair of opposing shorter edges 6a, 6b.In the example embodiment, the longer edges 5a, 5b each have a length of 1800 mm and the shorter edges 6a, 6b each have a length of 800 mm. In embodiments, the shower tray may have other shapes and dimensions.

The low level shower tray 1 comprises a floor 2. The floor 2 may comprise one or more anti-slip features (not shown) such as protrusions, ridges or roughened regions. The floor 2 slopes downwardly away from a first one of the opposing longer edges 5a in a direction towards a second one of the opposing longer edges 5b. A rim 3 bounds the floor 2 on three sides. The rim 3 joins the floor 2 to the pair of opposing shorter edges 6a, 6b and to the second one of the opposing longer edges 5b. At the first one of the opposing edges 5a, the floor 2 extends to the edge 5a.

Along the edge of the floor 2 proximal to the second of the opposing longer edges 5b, a sidewall 16 connects the floor 2 to the rim 3. The floor 2 slopes or curves gradually up to the level of the rim 3 at the edges of the floor 2 proximal to the pair of opposing shorter edges 6a, 6b and at the first of the opposing longer edges 5a. Since the sidewall 16 connects the floor 2 to the rim 3 at one edge, and the floor 2 slopes up to the level of the rim 3 on the other edges, the sidewall 16 does not extend above the level of the uppermost point of the floor 2.

A waste 4 is located at an edge of the floor 2 proximal to the second one of the opposing longer edges 5b. The waste 4 is located midway along the sidewall 16, between the pair of opposing shorter edges 6a, 6b. Therefore the sidewall 16 includes separate portions either side of the waste 4. The waste 4 comprises an elongate aperture extending in a direction parallel to the pair of opposing longer edges 5a, 5b. The floor 2 is configured such that water collected on the floor during operation of a shower (not shown) is directed to flow towards the waste 4. The floor 2 typically may have a slope at any given point of 1° or more to ensure the efficient flow of water towards the waste 4. The waste 4 is adapted to be connected to a waste pipe (not shown) for conveying waste water towards a drain (not shown).

In the illustrated embodiment, the low level shower tray 1 may be installed in a shower cubicle or shower enclosure in such a way that a user steps on to the floor 2 from the direction of the first one of the opposing longer edges 5a. Hence, the floor 2 directs water collected thereon away from the user's entry/exit location, which may help to limit or prevent water from inadvertently exiting the shower cubicle or enclosure on to the floor of the room in which the shower cubicle or enclosure is installed.

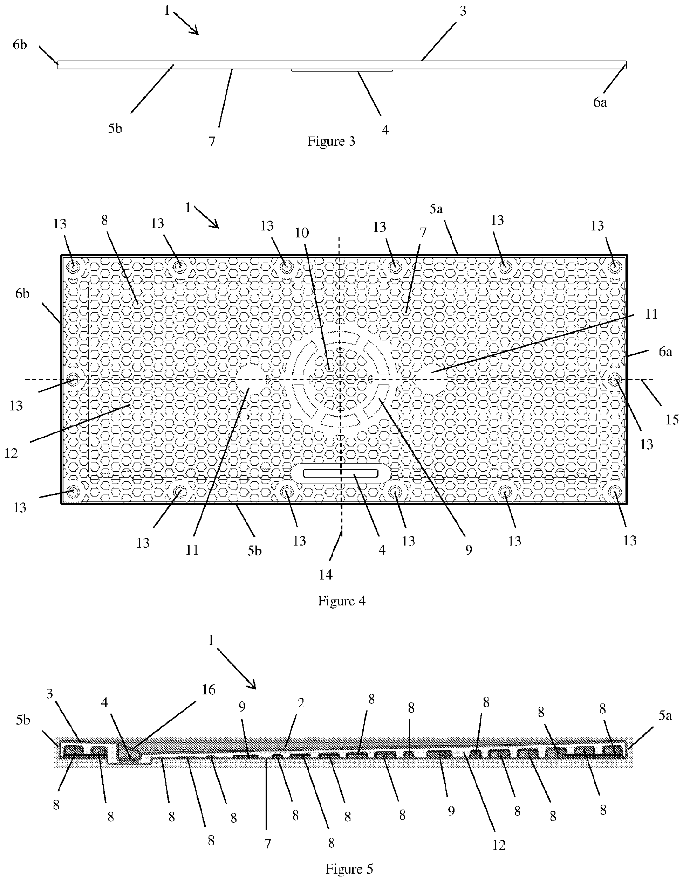

As can be seen clearly in Figures 3 and 5, the height of the shower tray 1 is measured from the underside of the tray 7 to the rim 3. The height of the shower tray does not include the waste. In the illustrated embodiment, the height is 26 mm.

The curving of the floor 3 up to the level of the rim 3 along three sides of the shower tray has been found to reduce the overall height of the shower tray 1 whilst still providing effective water collection at the waste 4.

The elongate waste 4 of the low level shower tray 1 has been found to provide for an efficient flow of waste water out of low level shower tray 1.

In embodiments, the desired location, shape and dimensions of the waste may be determined to some extent by aesthetic considerations.

In embodiments, the waste may be located at other positions in the floor and/or may have a different shape or dimensions. In embodiments, the shower tray may comprise more than one waste.

As can be seen clearly in Figure 3, the waste 4 protrudes from the underside 7.

Figure 4 shows in detail the underside 7 of the low level shower tray 1. Extending across substantially all of the underside 7 is a pattern of recesses with a continuous web 12 therebetween. The vast majority of the recesses are hexagonal recesses 8. In the illustrated embodiment, the hexagonal recesses measure approximately 28 mm across.

The pattern of recesses is symmetrical about a first line of symmetry indicated by a first dashed line 14, which bisects the waste 4. If the waste 4 is ignored, then the pattern of recesses is also symmetrical about a second line of symmetry indicated by a second dashed line 15. The second dashed line 15 is perpendicular to the first dashed line 14.

The pattern of recesses comprises a central portion 10 located centrally on the underside 7 of the low level shower tray 1. The central portion 10 comprises an array of tessellating hexagonal recesses with six arcuate recesses 9 forming a broken ring around the hexagonal recesses.

Outside the broken ring formed by the arcuate recesses 9, a relatively short distance towards each of the opposing shorter edges 6a, 6b is a recess-free region 11. The two recess-free regions 11 are each generally circular.

Outside the central region 10, other than the two recess-free regions 11 and around the waste 4, the pattern of recesses comprises a repeating pattern of tessellating hexagonal recesses 8. The hexagonal recesses are all regular hexagons of the same lateral dimensions. The ribs of the continuous web 12 between the hexagonal recesses 8 are of a generally uniform width. The ribs of the continuous web 12 between the hexagonal recesses 8 may for example have a width of at least 5 mm, up to or at least 10 mm, up to or at least 13 mm, up to or at least 15 mm, up to or at least 20 mm or up to or at least 30 mm. In the illustrated embodiment, in which the hexagonal recesses 8 are approximately 28 mm across, the ribs of the continuous web between the hexagonal recesses 8 have a width of from 13 mm to 15 mm.

At regularly-spaced locations around the perimeter of the underside 7, there are disposed 14 attachment features 13. The attachment features 13 are adapted for receiving legs or feet (not show), which may be used to install the low level shower tray raised at a height above a surface, e.g. floor. This may provide for instance a space between the underside 7 of the low level shower tray 1 and the surface for a waste pipe (not shown) to be connected to the waste 4 without the waste pipe having to be installed under or within the surface, as would be the case if the low level shower tray 1 were installed directly onto the surface.

The underside 7 may be provided with one or more holes (not shown) that are large enough to allow air or gas to pass through without being large enough to allow any filler material encased in the shell to pass through. Such holes may have a diameter of around 1 mm or less.

Figure 5 shows a cross-section through the low level shower tray 1 along the first dashed line 14. The downward slope of the floor 2 from the first one of the opposing longer edges 5a to the waste 4 can be seen. The depth of the recesses 8, 9 varies with position in such a way that the minimum distance between the floor 2 or rim 3 and the underside 7 of the low level shower tray 1 (i.e. between the bases of the recesses and the floor 2 or rim 3) is maintained substantially constant, typically at 5 mm or more. A gap of 5 mm or more is typically required to ensure that a filler material such as a resin-stone filler (e.g. a concrete) encased within the shell can occupy continuously substantially all of an internal volume within the shell.

By maintaining substantially constant the minimum distance between the floor or rim and the bases of the recesses in the underside of the low level shower tray, a controlled volume of a filler material may be used. Furthermore, the slope of the floor 2 required to direct liquid to the waste 4 can be formed whilst maintaining a low overall height of the shower tray 1. Also, the amount of filler material required to fill the shell is substantially less than the amount that would be required to fill a shell without the pattern of recesses on its underside, or that would be required to fill a shell with a pattern of recesses with constant depths across the underside of the low level shower tray. Accordingly, weight and cost of the shower tray may be reduced, whilst still maintaining strength.

The shell of the low level shower tray 1 comprises a plastics material, e.g. ABS. The shell is made up of two shell members. A first shell member comprises an upper portion of the shower tray and includes the floor and the rim. A second shell member comprises a lower portion of the shower tray and includes the underside. A filler material may be placed in one of the two shell members. The shell may then be completed by connecting the other of the two shell members to the one with the filler material disposed therein. Thus, the filler material may be encased within the shell.

Where the filler material is flowable, e.g. a curable mixture, the pattern of ribs formed by the recesses may help to guide the filler material to fill substantially all of the shell. In embodiments, the filler material may provide a single, continuous structure within the shell.

Load testing and comparative impact testing of a shower tray of the kind described above in relation to Figures 1 to 5 was carried out.

The comparative impact testing was carried out in comparison with a known low profile polymer-concrete shower tray, the Flight 40 shower tray available from Kohler Mira Limited (see https://www.mirashowers.co.uk/shower-trays/products/?page=3&sort=name-asc&installation-type=rectangle).

The Flight 40 shower tray used as the reference for the comparative impact testing was. The Flight 40 shower tray has a structure as disclosed in WO2005/011455 and was manufactured according to a method disclosed in WO2005/011455. The Flight 40 shower tray used for the comparative impact testing was rectangular (1200 mm by 760 mm) and had a height of 40 mm.

The impact tests involved dropping a 25 mm-radius ball of a known weight from a height of 1 m on to a central location on the floor of the shower trays being tested to ascertain damage due to impact. Tests were carried out using balls of four different weights: 200 g; 300 g; 1000 g; and 1700 g.

The results of these impact tests are shown in Table 1 below. Tray 1 refers to the comparative reference, i.e. the Flight 40 shower tray. Tray 2 refers to the low level shower tray illustrated in Figures 1 to 5 and discussed above. For each weight of ball, displacement, stress and plastic strain were measured at three locations through the thickness of the shower tray: at the upper skin (floor); mid-concrete (i.e. halfway between the upper skin and the lower skin); and the lower skin (underside).

**Table 1**

| Ball weight | | Tray 1 | | | Tray 2 | | |
|---|---|---|---|---|---|---|---|
| | | Upper skin | Mid-concrete | Lower skin | Upper skin | Mid-concrete | Lower skin |
| 200 g | Displacement (mm) | 0.529 | 0.529 | 0.470 | 0.951 | 0.951 | 0.951 |
| | Stress (MPa) | 31.15 | 56.38 | 9.46 | 12.16 | 47.06 | 6.49 |
| | Plastic strain (mm/mm) | 0.7% | 2.4% | 0.2% | 0.4% | 0.4% | 0.3% |
| 300 g | Displacement (mm) | 0.704 | 0.704 | 0.633 | 1.287 | 1.288 | 1.288 |
| | Stress (MPa) | 34.06 | 56.23 | 10.49 | 13.58 | 52.510 | 7.41 |
| | Plastic strain (mm/mm) | 0.9% | 3.1% | 0.4% | 0.5% | 0.5% | 0.4% |
| 1000 g | Displacement (mm) | 1.693 | 1.693 | 1.517 | 3.522 | 3.523 | 3.523 |
| | Stress (MPa) | 37.41 | 56.64 | 21.18 | 17.94 | 54.17 | 11.38 |
| | Plastic strain (mm/mm) | 1.8% | 4.4% | 0.9% | 0.6% | 0.6% | 0.6% |
| | Displacement (mm) | 2.452 | 2.451 | 2.257 | 5.351 | 5.351 | 5.351 |
| 1700 g | Stress (MPa) | 38.90 | 57.53 | 26.01 | 20.12 | 54.34 | 13.48 |
| | Plastic strain (mm/mm) | 2.2% | 4.8% | 1% | 0.7% | 0.7% | 0.7% |

Taking for example the results from the impact tests carried out with the second lightest (300 g) ball, it can be seen that for Tray 2, the stress at the top skin was 13.58 MPa, the stress at the lower skin was 7.41 MPa, the strain at the top skin was 0.5% and the strain at the lower skin was 0.4%. The corresponding values for Tray 1 were all 34.06 MPa, 10.49 MPa, 0.9% and 0.4% respectively.

Generally, it can be seen that the stress and strain in Tray 2 are typically lower than in Tray 1. The stress may be almost halved and the strain may be reduced by up to two thirds.

Accordingly, Tray 2 may be more robust than Tray 1, i.e. better able to withstand impacts during installation and use.

Without wishing to be bound by any theory, it is believed that the better impact test results for Tray 2 than Tray 1 may be attributable to mechanical stresses being well distributed through the continuous web by the pattern of recesses and ribs therebetween. Accordingly, there may be a reduced chance of cracks developing in Tray 2.

The low level shower tray 1 of Figures 1 to 5 was also subjected to load testing. A 100 kg static load was applied to the shower tray at a central location. The shower tray exhibited excellent resistance to deflection during load testing. The shower tray deflected 1.14 mm under the 100 kg load. Accordingly, the shower tray exhibited excellent resistance to deflection during load testing, particularly for a low level shower tray. The combination of excellent resistance to deflection and low profile is highly desirable in shower trays.

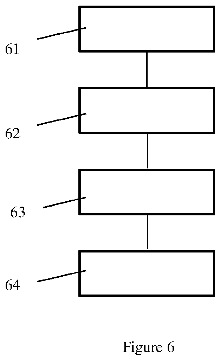

Figure 6 is a flow chart illustrating an example embodiment of a method of manufacture of an article of sanitary such as a shower tray. The low level shower tray 1 discussed above may for example be manufactured according to such a method of manufacture.

A first step 61 comprises providing a first shell member. The first shell member may comprise a plastics material. The first shell member may constitute an upper part of a shower tray (i.e. a part of a shower tray comprising a floor) or a lower part of a shower tray (i.e. a part of a shower tray comprising an underside).

A second step 62 comprises placing a filler material within the first shell member. Placing the filler material within the first shell member may be done by pouring the filler material. The filler material may comprise a stone-resin material.

A third step 63 comprises encasing the filler material by completing the shell with one or more further shell members. For example, a second shell member may be attached to the first shell member to form the shell and encase the filler material therein. The second shell member may comprise a plastics material. The first shell member may constitute a first part of an article of sanitary ware such as an upper part of a shower tray (e.g. a part of a shower tray comprising a floor) or a lower part of a shower tray (i.e. a part of a shower tray comprising an underside) and the second shell member may constitute a second part of the article of sanitary ware, e.g. the other of the upper part of the shower tray or the lower part of the shower tray.

A fourth step 64 comprises, if required, applying pressure to the shell with the filler material encased therein, to promote bonding of the filler material to the first shell member and/or the second shell member and/or to promote curing of the filler material. Pressure may be applied for any suitable period of time. Additionally or alternatively, the shell with the filler material encased therein may be held at a predetermined, e.g. elevated temperature, for a predetermined period of time, to promote bonding of the filler material to the first shell member and/or the second shell member and/or to promote curing of the filler material.

The method of manufacture may comprise further applications of pressure for predetermined periods of time.

The method of manufacture may comprise one or more additional machining or finishing steps.

It will be understood that various modifications and improvements can be made without departing from the scope of the invention, as defined by the appended claims.

## Claims

1. An article of sanitary ware (1) comprising a hollow shell; wherein a filler material is disposed within the shell, the filler material forming a continuous structure within the shell, the shell comprising: a first surface (2) adapted to provide a water collection surface; and a second surface (7) opposed to the first surface (2, 3); wherein the second surface (7) comprises a pattern of recesses (8, 9) with ribs therebetween, wherein the ribs comprise the filler material, and **characterized in that** the depth of the bases of the recesses (8, 9) varies with position in such a way that the minimum distance between the water collection surface and bases of the recesses (8, 9) is maintained substantially constant.

2. An article of sanitary ware (1) according to claim 1, wherein the filler material forms a continuous web (12) within the shell.

3. An article of sanitary ware (1) according to claim 1 or claim 2, wherein the article of sanitary ware (1) is a shower tray.

4. An article of sanitary ware (1) according to claim 3, wherein a floor (2) forms at least a portion of the water collection surface of the shower tray (1), optionally, wherein one or more sidewalls (16) extend from the edges of the floor (2), and optionally wherein the or each sidewall (16) does not extend above the level of the uppermost point of the floor (2), and/or optionally wherein only one sidewall (16) extends from an edge of the floor (2).

5. An article of sanitary ware (1) according to any preceding claim, wherein the article of sanitary ware (1) has a height of up to 40 mm, optionally wherein the article of sanitary ware (1) has a height of up to 30 mm.

6. An article of sanitary ware (1) according to any preceding claim, wherein the pattern of recesses (8, 9) extends across at least 50% of the second surface (7).

7. An article of sanitary ware (1) according to any preceding claim, wherein each recess (8, 9) has a longest lateral dimension of up to 150 mm, preferably up to 120 mm, more preferably up to 100 mm, yet more preferably up to 80 mm or most preferably up to 50 mm.

8. An article of sanitary ware (1) according to any preceding claim, wherein the pattern of recesses (8, 9) comprises a repeating pattern, wherein at least some of the recesses (8, 9) in the repeating pattern tessellate with one another, and/or wherein at least some of the recesses (8, 9) in the repeating pattern are polygonal in cross-section.

9. An article of sanitary ware (1) according to any preceding claim, wherein the shell is configured such that a distance between any given point on the first surface (2, 3) and a corresponding point on the second surface (7) is at least 2 mm or preferably at least 5 mm.

10. An article of sanitary ware (1) according to any preceding claim, wherein the filler material occupies a major portion of an internal volume of the shell.

11. An article of sanitary ware (1) according to any preceding claim, wherein the shell comprises two or more shell members, optionally wherein the shell is formed of a first shell member and a second shell member, the first shell member including the first surface (2, 3) and the second shell member including the second surface (7).

12. An ablutionary installation comprising an article of sanitary ware (1) according to any preceding claim.

13. A method of manufacture of an article of sanitary ware (1) comprising:
forming a shell, disposing a filler material within the shell, the filler material forming a continuous structure (12) within the shell, the shell comprising: a first surface (2, 3) adapted to provide a water collection surface; and a second surface (7) opposed to the first surface (2, 3); wherein the second surface (7) comprises a pattern of recesses (8, 9) with ribs therebetween, wherein the ribs comprise the filler material, and **characterized in that** the depth of the bases of the recesses (8, 9) varies with position in such a way that the minimum distance between the water collection surface and bases of the recesses (8, 9) is maintained substantially constant.

14. A method of manufacture according to claim 13 comprising the steps of: providing a first shell member; placing a filler material within the first shell member; and encasing the filler material by completing the shell with one or more further shell members.

## Patentansprüche

1. Sanitärartikel (1), umfassend eine hohle Schale; wobei ein Füllmaterial innerhalb der Schale angeordnet ist, wobei das Füllmaterial eine kontinuierliche Struktur innerhalb der Schale bildet, wobei die Schale umfasst: eine erste Oberfläche (2), die dazu angepasst ist, eine Wassersammeloberfläche bereitzustellen; und eine zweite Oberfläche (7), die der ersten Oberfläche (2, 3) gegenüberliegt; wobei die zweite Oberfläche (7) ein Muster von Aussparungen (8, 9) mit Rippen dazwischen umfasst, wobei die Rippen das Füllmaterial umfassen, und **dadurch gekennzeichnet, dass** die Tiefe der Basen der Aussparungen (8, 9) mit der Position in einer solchen Weise variiert, dass der Mindestabstand zwischen der Wassersammeloberfläche und den Basen der Aussparungen (8, 9) im Wesentlichen konstant gehalten wird.

2. Sanitärartikel (1) nach Anspruch 1, wobei das Füllmaterial eine kontinuierliche Bahn (12) innerhalb der Schale bildet.

3. Sanitärartikel (1) nach Anspruch 1 oder Anspruch 2, wobei der Sanitärartikel (1) eine Duschwanne ist.

4. Sanitärartikel (1) nach Anspruch 3, wobei ein Boden (2) mindestens einen Abschnitt der Wassersammelfläche der Duschwanne (1) bildet, wobei sich gegebenenfalls eine oder mehrere Seitenwände (16) von den Rändern des Bodens (2) aus erstrecken, und wobei sich gegebenenfalls die oder jede Seitenwand (16) nicht über das Niveau des obersten Punktes des Bodens (2) hinaus erstreckt, und/oder wobei sich gegebenenfalls nur eine Seitenwand (16) von einem Rand des Bodens (2) aus erstreckt.

5. Sanitärartikel (1) nach einem vorstehenden Anspruch, wobei der Sanitärartikel (1) eine Höhe von bis zu 40 mm aufweist, wobei der Sanitärartikel (1) gegebenenfalls eine Höhe von bis zu 30 mm aufweist.

6. Sanitärartikel (1) nach einem vorstehenden Anspruch, wobei sich das Muster der Aussparungen (8, 9) über mindestens 50 % der zweiten Oberfläche (7) erstreckt.

7. Sanitärartikel (1) nach einem vorstehenden Anspruch, wobei jede Aussparung (8, 9) eine längste seitliche Abmessung von bis zu 150 mm, vorzugsweise bis zu 120 mm, bevorzugter bis zu 100 mm, noch bevorzugter bis zu 80 mm oder besonders bevorzugt bis zu 50 mm aufweist.

8. Sanitärartikel (1) nach einem vorstehenden Anspruch, wobei das Muster der Aussparungen (8, 9) ein sich wiederholendes Muster umfasst, wobei mindestens einige der Aussparungen (8, 9) in dem sich wiederholenden Muster mosaikartig ineinander übergehen, und/oder wobei mindestens einige der Aussparungen (8, 9) in dem sich wiederholenden Muster im Querschnitt polygonal sind.

9. Sanitärartikel (1) nach einem vorstehenden Anspruch, wobei die Schale so konfiguriert ist, dass ein Abstand zwischen einem beliebigen Punkt auf der ersten Oberfläche (2, 3) und einem entsprechenden Punkt auf der zweiten Oberfläche (7) mindestens 2 mm oder vorzugsweise mindestens 5 mm beträgt.

10. Sanitärartikel (1) nach einem vorstehenden Anspruch, wobei das Füllmaterial einen größeren Abschnitt des Innenvolumens der Schale einnimmt.

11. Sanitärartikel (1) nach einem vorstehenden Anspruch, wobei die Schale zwei oder mehr Schalenelemente umfasst, wobei die Schale gegebenenfalls aus einem ersten Schalenelement und einem zweiten Schalenelement gebildet ist, wobei das erste Schalenelement die erste Oberfläche (2, 3) beinhaltet und das zweite Schalenelement die zweite Oberfläche (7) beinhaltet.

12. Sanitärinstallation, die einen Sanitärartikel (1) nach einem vorstehenden Anspruch umfasst.

13. Herstellungsverfahren eines Sanitärartikels (1), umfassend:
Bilden einer Schale, Anordnen eines Füllmaterials innerhalb der Schale, wobei das Füllmaterial eine kontinuierliche Struktur (12) innerhalb der Schale bildet, wobei die Schale umfasst: eine erste Oberfläche (2, 3), die dazu angepasst ist, eine Wassersammeloberfläche bereitzustellen; und eine zweite Oberfläche (7), die der ersten Oberfläche (2, 3) gegenüberliegt; wobei die zweite Oberfläche (7) ein Muster von Aussparungen (8, 9) mit Rippen dazwischen umfasst, wobei die Rippen das Füllmaterial umfassen, und **dadurch gekennzeichnet, dass** die Tiefe der Basen der Aussparungen (8, 9) mit der Position in einer solchen Weise variiert, dass der Mindestabstand zwischen der Wassersammeloberfläche und den Basen der Aussparungen (8, 9) im Wesentlichen konstant gehalten wird.

14. Herstellungsverfahren nach Anspruch 13, das die folgenden Schritte umfasst von: Bereitstellen eines ersten Schalenelements; Einbringen eines Füllmaterials in das erste Schalenelement; und Umschließen des Füllmaterials durch Vervollständigen der Schale mit einem oder mehreren weiteren Schalenelementen.

## Revendications

1. Article d'installation sanitaire (1) comprenant une coque creuse ; dans lequel un matériau de remplissage est disposé à l'intérieur de la coque, le matériau de remplissage formant une structure continue à l'intérieur de la coque, la coque comprenant : une première surface (2) conçue pour fournir une surface de collecte d'eau ; et une seconde surface (7) opposée à la première surface (2, 3) ; dans lequel la seconde surface (7) comprend un motif d'évidements (8, 9) avec des nervures entre ceux-ci, dans lequel les nervures comprennent le matériau de remplissage, et **caractérisé en ce que** la profondeur des bases des évidements (8, 9) varie avec la position de telle manière que la distance minimale entre la surface de collecte d'eau et les bases des évidements (8, 9) soit maintenue sensiblement constante.

2. Article d'installation sanitaire (1) selon la revendication 1, dans lequel le matériau de remplissage forme une bande continue (12) à l'intérieur de la coque.

3. Article d'installation sanitaire (1) selon la revendication 1 ou la revendication 2, dans lequel l'article d'installation sanitaire (1) est un receveur de douche.

4. Article d'installation sanitaire (1) selon la revendication 3, dans lequel un fond (2) forme au moins une partie de la surface de collecte d'eau du receveur de douche (1), facultativement, dans lequel une ou plusieurs parois latérales (16) s'étendent à partir des bords du fond (2) et, facultativement, dans lequel la ou chaque paroi latérale (16) ne s'étend pas au-dessus du niveau du point le plus élevé du fond (2) et/ou, facultativement, dans lequel une seule paroi latérale (16) s'étend à partir d'un bord du fond (2).

5. Article d'installation sanitaire (1) selon une quelconque revendication précédente, dans lequel l'article d'installation sanitaire (1) présente une hauteur allant jusqu'à 40 mm, facultativement dans lequel l'article d'installation sanitaire (1) présente une hauteur allant jusqu'à 30 mm.

6. Article d'installation sanitaire (1) selon une quelconque revendication précédente, dans lequel le motif d'évidements (8, 9) s'étend sur au moins 50 % de la seconde surface (7).

7. Article d'installation sanitaire (1) selon une quelconque revendication précédente, dans lequel chaque évidement (8, 9) présente une dimension latérale la plus longue allant jusqu'à 150 mm, de préférence jusqu'à 120 mm, plus préférentiellement jusqu'à 100 mm, encore plus préférentiellement jusqu'à 80 mm ou le plus préférentiellement jusqu'à 50 mm.

8. Article d'installation sanitaire (1) selon une quelconque revendication précédente, dans lequel le motif d'évidements (8, 9) comprend un motif répétitif, dans lequel au moins certains des évidements (8, 9) du motif répétitif s'imbriquent les uns avec les autres et/ou dans lequel au moins certains des évidements (8, 9) du motif répétitif présentent une section transversale polygonale.

9. Article d'installation sanitaire (1) selon une quelconque revendication précédente, dans lequel la coque est configurée de telle sorte qu'une distance entre un point donné sur la première surface (2, 3) et un point correspondant sur la seconde surface (7) soit au moins de 2 mm ou, de préférence, au moins de 5 mm.

10. Article d'installation sanitaire (1) selon une quelconque revendication précédente, dans lequel le matériau de remplissage occupe une partie majeure d'un volume interne de la coque.

11. Article d'installation sanitaire (1) selon une quelconque revendication précédente, dans lequel la coque comprend deux éléments de coque, ou plus, facultativement dans lequel la coque est formée d'un premier élément de coque et d'un second élément de coque, le premier élément de coque incluant la première surface (2, 3) et le second élément de coque incluant la seconde surface (7).

12. Installation pour les ablutions comprenant un article d'installation sanitaire (1) selon une quelconque revendication précédente.

13. Procédé de fabrication d'un article d'installation sanitaire (1) comprenant :
la formation d'une coque, la disposition d'un matériau de remplissage à l'intérieur de la coque, le matériau de remplissage formant une structure continue (12) à l'intérieur de la coque, la coque comprenant : une première surface (2, 3) conçue pour fournir une surface de collecte d'eau ; et une seconde surface (7) opposée à la première surface (2, 3) ; dans lequel la seconde surface (7) comprend un motif d'évidements (8, 9) avec des nervures entre ceux-ci, dans lequel les nervures comprennent le matériau de remplissage, et **caractérisé en ce que** la profondeur des bases des évidements (8, 9) varie avec la position de telle manière que la distance minimale entre la surface de collecte d'eau et les bases des évidements (8, 9) soit maintenue sensiblement constante.

14. Procédé de fabrication selon la revendication 13 comprenant les étapes de : fourniture d'un premier élément de coque ; placement d'un matériau de remplissage à l'intérieur du premier élément de coque ; et encapsulation du matériau de remplissage en achevant la coque avec un ou plusieurs autres éléments de coque.
